(19) Europäisches Patentamt
European Patent Office
Office européen des brevets

(11) **EP 3 431 617 B1**

(12) **EUROPÄISCHE PATENTSCHRIFT**

(45) Veröffentlichungstag und Bekanntmachung des Hinweises auf die Patenterteilung:
**06.09.2023 Patentblatt 2023/36**

(21) Anmeldenummer: **18185039.7**

(22) Anmeldetag: **23.07.2018**

(51) Internationale Patentklassifikation (IPC):
**C22B 1/245** *(2006.01)* **C22B 1/248** *(2006.01)*

(52) Gemeinsame Patentklassifikation (CPC):
**C22B 1/245; C22B 1/248**

(54) **PELLET ALS ZUSCHLAGSTOFF FÜR METALLURGISCHE PROZESSE UND VERFAHREN ZU DESSEN HERSTELLUNG UND VERWENDUNG**

PELLET AS AN ADMIXTURE FOR METALLURGICAL PROCESSES AND METHOD FOR MAKING AND USING THE SAME

GRANULÉS EN TANT QU'AGRÉGAT POUR PROCESSUS MÉTALLURGIQUES ET LEUR PROCÉDÉ DE FABRICATION ET D'UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.07.2017 DE 102017212583**

(43) Veröffentlichungstag der Anmeldung:
**23.01.2019 Patentblatt 2019/04**

(73) Patentinhaber: **Technische Universität Bergakademie Freiberg**
**09599 Freiberg (DE)**

(72) Erfinder:
• **KRAMPITZ, Thomas**
**09599 Freiberg (DE)**
• **Lieberwirth, Holger**
**04103 Leipzig (DE)**

(74) Vertreter: **Pfenning, Meinig & Partner mbB**
**Patent- und Rechtsanwälte**
**Theresienhöhe 11a**
**80339 München (DE)**

(56) Entgegenhaltungen:
DE-A1-102005 062 036    DE-A1-102015 011 067
JP-B2- 5 475 630    US-A- 5 372 632
US-A1- 2013 177 765

**Beschreibung**

Die vorliegende Erfindung betrifft Pellets als Zuschlagstoff für metallurgische Prozesse. Die Pellets enthalten kohlenstofffaserhaltige Werkstoffe mit einem maximalen gemittelten Äquivalentdurchmesser $x_{80}$ von 1,0 mm und eine eisenhaltige Komponente, wobei das Gewichtsverhältnis von kohlenstofffaserhaltigen Werkstoffen zu eisenhaltiger Komponente im Bereich von 1:99 bis 50:50 liegt. Des Weiteren betrifft die Erfindung ein Verfahren zur Herstellung dieser Pellets und eine Verwendung der Pellets.

Mit Hilfe von metallurgischen Prozessen werden anwendungstechnisch interessante Werkstoffe, wie beispielsweise Stahl, Eisen, Kupfer, Nickel, Blei, Zink und Aluminium gewonnen. Die Bedeutung dieser Prozesse ist enorm: Alleine die europäische Stahlproduktion lag im Jahr 2012 bei 169 Millionen Tonnen.

Aufgrund dieser hohen Produktionsmengen führen bereits kleine Prozessoptimierungen zu einer beachtlichen Steigerung der Wirtschaftlichkeit des ganzen Industriezweiges.

Ein besonderes Potential zur Optimierung von metallurgischen Prozessen ist in der Substitution der klassischen Zuschlagstoffe zu sehen. Wenn ein Teil der klassischen Zuschlagstoffe durch Abfallprodukte ersetzt wird, können einerseits Materialkosten eingespart und natürliche natürlichen Rohstoffquellen geschont werden, andererseits kann auf aufwendige und teilweise kostspielige Prozeduren zur Entsorgung der Abfallprodukte verzichtet werden.

Als Abfallprodukte kommen beispielsweise kohlenstofffaserhaltige Werkstoffe in Frage.

Aus der Klasse der kohlenstofffaserhaltigen Werkstoffe werden derzeit insbesondere kohlenstofffaserverstärkte Kunststoffe (CFK) wegen ihrer vielfältigen vorteilhaften mechanischen Eigenschaften in vielen technischen Bereichen (z.B. Fahrzeugbau, Luftfahrt, Hochleistungssport) eingesetzt. Diese Verbundwerkstoffe bestehen überwiegend aus Kohlenstofffasern und einer Kunststoffmatrix aus thermoplastischen (z.B. PP, PA6) oder duroplastischen (z.B. EP) Kunststoffen. Die Kohlenstofffasern können in unterschiedlichen Strukturen (z.B. Gelegen oder Geweben) in den CFK angeordnet sein. Ihr Gehalt in den CFK beträgt dabei typischerweise um die 40%.

Viele der kohlenstofffaserhaltigen Werkstoffe stehen irgendwann zur Entsorgung an. Aus den CFK entstehen beispielsweise am Ende der Nutzungsphase (End-of-Life) oder bei der Herstellung der Halbzeuge oder verkaufsfähigen Produkte große Mengen an kohlenstofffaserhaltigen Abfällen. Bei den End-of-Life Abfällen handelt es sich fast ausschließlich um ausgehärtete CFK-Strukturen. Bei der Herstellung fällt hingegen überwiegend Faserverschnitt (unbenetzt oder mit Kunststoffschlichte benetzt) an.

Studien zeigen, dass im Jahr 2022 mit einer jährlichen Produktion von etwa 191.000 t/a CFK zu rechnen ist, die am Ende des Lebenszyklus der Verwertung zugeführt werden müssen. Aber auch in der Vergangenheit fielen in Europa und den USA schon schätzungsweise 3.000 t CFK-haltige Abfälle zur Entsorgung an (Zahl aus 2010 in "Composites Marktbericht 2015", Thomas Kraus, Michael Kühnel und Elmar Witten, Industrieverein Verstärkte Kunststoffe AVK, Carbon Composites e.V. CCeV, 2015).

US 5,372,635 A offenbart eine zum Druck geeignete Tintenzusammensetzung, die eine Dispersion von etwa 10 bis 25 Gew.-%, bezogen auf das Gewicht der Zusammensetzung eines Blends, in etwa 40 bis 90 Gew.-%, bezogen auf das Gewicht der Zusammensetzung eines C7-C40-Öls, und (b) etwa 0,1 bis 5 Gew.-%, bezogen auf das Gewicht der Zusammensetzung einer Seife einer Tallölfettsäure.

DE 10 2015 011 067 A1 offenbart ein Verfahren zur Brikettierung von fein- und feinstkörnigen metallhaltigen Legierungszuschlägen der Stahl-Gießerei- bzw. NE-Metallurgie, bei dem den als Legierungszuschlag zu verarbeitenden fein- und feinstkörnigen metallhaltigen Legierungszuschlägen vor der Brikettierung ein C-Faser haltiges Abbauprodukt eines definierten Fasergehaltes und definierter Fasereigenschaften als Strukturbildner so zugemischt wird, dass eine mechanische Verfestigung der Briketts bei einem geringen Bindemittelanteil auf die vorgegebene Zielfestigkeit möglich ist, wobei die extrem wärmebeständigen C-Fasern gleichzeitig ein verzögert verfügbares Depot für die Aufkohlung der Schmelze darstellen.

Aus der DE 10 2005 062036 A1 ist ein Agglomeratstein zum Einsatz im Schacht, Corex- oder Hochöfen und die Verwendung von Eisenerz-Fein- und Feinstäuben bekannt.

JP 5 475 630 B2 beschreibt ein Agglomerat, enthaltend Eisenoxidquellen, wie z. B. Eisenerz und Eisenoxid und ein Reduktionsmittel, das Kohlenstoff beinhaltet.

Zwar existieren für kohlenstofffaserhaltige Abfälle aus CFK Recyclingtechnologien, die eine stoffliche Verwertung ermöglichen (z.B. Pyrolyse mit anschließender Herstellung von Kohlenstofffaser-Vliesen für den Fahrzeugbau), allerdings entstehen bei der Aufbereitung und der anschließenden Fertigung neue kohlenstofffaserhaltige Abfälle, die ihrerseits wieder zur Behandlung anstehen und verwertet werden müssen.

Zudem sind die aktuellen Recyclingrouten nicht optimal, da die Kohlenstofffasern mit jedem Recyclingschritt kürzer werden und auch die Kunststoffe Alterungserscheinungen zeigen, so dass die Stoffe dem Stoffkreislauf irgendwann entzogen und einer anderen Verwertung zugeführt werden müssen.

Einen belastbaren und wirtschaftlichen Verwertungsweg für kohlenstofffaserhaltige Abfälle aus CFK, bei dem die Fasern nicht isoliert und einer neuen stofflichen Nutzung zugeführt werden, gibt es momentan nicht. Dies trifft vor allem für Abfälle zu, die kurzfaserverstärkte Kunststoffe enthalten.

In der Regel werden die kohlenstofffaserhaltige Abfälle momentan thermisch in Abfallverbrennungsanlagen verwertet, wobei die darin gespeicherte Energie zur Erzeugung von Wärme oder elektrischer Energie genutzt wird. CFK-haltige Abfälle können jedoch nicht ohne eine entsprechende Vorbehandlung verbrannt werden, da die in den Abfallverbrennungsanlagen vorherrschenden Prozessbedingungen nicht ausreichen, um die Kohlenstofffasern vollständig zu verbrennen.

Auch eine Deponierung von kohlestofffaserhaltigen Abfällen als Entsorgungsstrategie fällt aus, weil dies allein schon aufgrund des hohen Heizwertes nicht akzeptabel ist. Dies gilt auch für Kohlenstofffasern aus Verschnitt, da diese eine Kunststoffschlichte besitzen. Mit der voraussichtlich steigenden Menge an CFK-haltigem Abfall wird gleichzeitig das Problem der Entsorgung dieser Abfälle in Zukunft noch weiter zunehmen.

Die Entwicklung alternativer stofflicher Verwertungswege wie beispielsweise einer zumindest teilweisen Substitution klassischer Zuschlagstoffe durch einen Teil dieser Abfälle, ist daher dringlich und essentiell.

Der nachhaltigen Nutzung kohlenstofffaserhaltiger Werkstoffe als Zuschlagstoff für metallurgische Prozesse standen bisher die folgenden Problematiken entgegen:
Einerseits zeigte sich, dass sich die kohlenstofffaserhaltigen Werkstoffe wegen ihrer geringen Dichte (ca. 1-2 g/cm$^2$) nicht mit der Schmelze des Aufgebgutes in metallurgischen Prozessen (Dichten von 7-9 g/cm$^3$) vermischen, sondern aufschwimmen. Eine Prozessvorschrift, mit der eine homogene Mischung aus kohlenstofffaserhaltigen Werkstoffen und der jeweiligen metallhaltigen Schmelze des Aufgebgutes in einem metallurgischen Prozess erzielt werden kann, ist bis heute noch nicht bekannt. Auch eine Zerkleinerung der kohlenstoffhaltigen Werkstoffe, die prinzipiell für das Herstellen einer homogenen Mischung erforderlich ist, kann das Problem nicht lösen. Sie verstärkt den Entmischungseffekt vielmehr.

Andererseits wurde bei Zugabe von kohlenstofffaserhaltigen Werkstoffen in metallurgische Prozesse eine starke Rauchgasentwicklung beobachtet. Setzt man die kohlenstofffaserhaltigen Stoffe, die zu einem beachtlichen Teil aus CFK bestehen, unbehandelt ein, so verbrennen schlagartig große Mengen an Kunststoff. Die Abgasbehandlungsanlagen sind gezwungen, die großen Mengen an Rauchgas zu verarbeiten, was aus prozesstechnischer Sicht überaus anspruchsvoll ist.

Zudem bestehen Probleme bei der Zerkleinerung von kohlenstofffaserhaltigen Werkstoffen, da hierbei größerer Mengen von Kohlenstofffasern freigesetzt werden. Die schloss bislang eine Verwertungsmöglichkeit kohlenstofffaserhaltiger Werkstoffe als Zuschlagstoff für metallurgische Prozesse aus.

Eine Zerkleinerung der CFK-haltigen, kohlenstofffaserhaltigen Werkstoffe ist erforderlich, da Reaktions- und Prozessführungsbedingungen in den metallurgischen Prozessen dadurch verbessert werden. Bei nicht-zerkleinerten kohlenstofffaserhaltigen Werkstoffen treten Abschirmeffekte auf. Äußere Kohlenstofffaserschichten, so wie Matten oder Vliese aus Kohlenstofffasern, schirmen die innenliegende Kohlenstofffasern von der Umgebung und potentiellen Oxidationsmitteln ab und es steht nur ein geringer Anteil der Kohlenstofffasern für eine Reaktion zur Verfügung. Somit bleibt der erzielte Umsatz der Kohlenstofffasern weit hinter dem maximal möglichen Umsatz zurück.

Bei einer Zerkleinerung besteht allerdings die Gefahr, dass Kohlenstofffasern in die Umgebungsluft und damit in die Abgasbehandlung gelangen (z.B. durch Aufwirbeln teilverbrannter Kohlenstofffasern). Dies muss unbedingt vermieden werden, da Kohlenstofffasern elektrisch leitfähig sind und die Maschinen sowie die Vorrichtung zur Abgasbehandlung schwer beschädigen können. Dies trifft auch für die Weiterverarbeitung oder für die Verwendung in metallurgischen Prozessen zu.

Aus diesen Gründen finden kohlenstofffaserhaltige Werkstoffe derzeit kaum Verwendung als Zuschlagstoff in metallurgischen Prozessen und bei der Substitution von Koks.

Ausgehend hiervon war es Aufgabe der vorliegenden Erfindung, ein Pellet enthaltend kohlestofffaserhaltige Werkstoffe bereitzustellen, das eine stabile Mischung mit dem Aufgebgut in metallurgischen Prozessen bildet, ein hohes Reduktionspotential aufweist, in dem metallurgischen Prozess vollständig umgesetzt werden kann und demnach als Zuschlagstoff verwendet werden kann. Des Weiteren war es Aufgabe ein Verfahren zur Herstellung eines solchen Pellets anzugeben und konkrete Verwendungsmöglichkeiten aufzuzeigen.

Hinsichtlich der Pellets wurde die Aufgabe mit den Merkmalen des Patentanspruches 1 und hinsichtlich des Verfahrens mit den Merkmalen des Patentanspruches 12 gelöst. Die Details zur Verwendung finden sich in Anspruch 17. Die abhängigen Patentansprüche stellen vorteilhafte Weiterbildungen dar.

Erfindungsgemäß wird ein Pellet als Zuschlagstoff für metallurgische Prozesse bereitgestellt, das kohlenstofffaserhaltige Werkstoffe mit einem, gemäß der Prüfsiebung in DIN 66165-2:2016-08 bestimmten, gemittelten Äquiva-lentdurchmesser $x_{80}$ von maximal 1,0 mm und eine eisenhaltige Komponente enthält, wobei das Gewichtsverhältnis der kohlenstofffaserhaltigen Werkstoffe zu der eisenhaltigen Komponente von 1 : 99 bis 50 : 50 beträgt.

Erfindungsgemäß weist das Pellet einen, gemäß der Prüfsiebung in DIN 66165-2:2016-08 bestimmten, gemittelten Äquivalentdurchmesser xso von 5 bis 25 mm, bevorzugt von 8 bis 20 mm, besonders bevorzugt von 10 bis 15 mm auf.

Bei den erfindungsgemäßen Pellets handelt es sich nicht um aus dem Stand der Technik bekannte Briketts. Ein Brikett wird üblicherweise unter hohem Energieeinsatz, d.h. sehr hohem äußeren Druck (z.B. 60 - 190 MPa) und erhöhten Temperaturen (z.B. 20 - 80°C) aus einem sich in einer Form befindliches fließfähiges Stoffgemisch, erzeugt.

Es ist nahezu porenfrei. Beim Brikettieren werden vorzugsweise größere Partikel eingesetzt, die sich unter Druck plastisch verformen, kompaktieren und verfestigen lassen, wobei gerade faserartigen Strukturen erheblich zur Verfestigung der Briketts beitragen. Demgegenüber entstehen die erfindungsgemäßen Pellets bevorzugt durch Agglomeration von z.B. feinstdispersern Partikeln auf Grund von Adhäsion/Oberflächeneffekten mit einem Bruchteil des oben erwähnten Energieaufwands. Pellets weisen üblicherweise mehr oder weniger ausgeprägte Porenräume auf, deren Größe und Anteil durch technologische Maßnahmen beeinflusst werden kann.

Durch den kleinen gemittelten Äquivalentdurchmesser $x_{80}$ liegen die kohlenstofffaserhaltige Werkstoffe mit einer hohen spezifischen Oberfläche in dem Pellet vor. Dies gewährleistet die vollständige Oxidation der Kohlenstofffasern und eine effektive Reduktion der Metalloxide. Außerdem liegen die Kohlenstofffasern bei diesem Äquivalentdurchmesser zu einem großen Anteil vereinzelt vor und sind homogen in dem Pellet verteilt, so dass eine gegenseitig abschirmende Wirkung (z.B. eine Abschottung der Fasern durch Faservliese) vermieden werden kann.

Die eisenhaltige Komponente bewirkt außerdem, dass das Pellet eine höhere Dichte aufweist. Wenn das Gewichtsverhältnis der kohlenstofffaserhaltigen Werkstoffe zu der eisenhaltigen Komponente in dem Pellet von 1 : 99 bis 50 : 50 beträgt, kann sichergestellt werden, dass das Pellet sich als Zuschlagstoff in metallurgischen Prozessen eignet und nicht aufgrund eines zu hohen Dichteunterschiedes auf der Schmelze des Aufgebgutes in dem jeweiligen Prozess aufschwimmt und eine separate Phase bildet. Außerdem können sowohl die eisenhaltige Komponente als auch die Überreste der kohlenstofffaserhaltigen Werkstoffe in dem Produkt des jeweiligen metallurgischen Prozesses verbleiben.

Diese Abmessungen erlauben eine gute Transport-, Lager- und Rollfähigkeit der Pellets. Sie können für einen längeren Zeitraum in Silos problemlos bevorratet werden, was mit den kohlenstofffaserhaltigen Werkstoffen nicht möglich ist. Zudem sind Pellets mit diesem gemittelten Äquivalentdurchmesser gut dosierbar.

Vorteilhaft ist weiterhin, wenn die kohlenstofffaserhaltigen Werkstoffe in dem Pellet ausgewählt sind aus der Gruppe bestehend aus kohlenstofffaserverstärkten Kunststoffen (CFK), mit einer Polymerschlichte benetzten Kohlestofffasern und -filamenten (Prepregs), Kohlestofffaserverschnitten, Kohlestofffasergeflechten, Kohlestofffasergeweben, Kohlestofffasergelegen, Kohlestofffaservliesen, Kohlestofffaserstaub, Kohlestofffasern und Mischungen hiervon. Besonders bevorzugt sind die kohlenstofffaserhaltigen Werkstoffe kohlenstofffaserhaltige Abfälle, die zur Entsorgung anstehen.

Diese kohlenstofffaserhaltigen Werkstoffe sind für die Anwendung zur Substitution von Koks und anderen klassischen Zuschlagstoffen in metallurgischen Prozessen sehr gut geeignet, da sie keine oder nur geringe Mengen von störenden Elementen wie Schwefel oder Phosphor beinhalten. Kohlestofffaserverschnitte, -geflechte, -gewebe, -gelege, -vliese, und Kohlestofffaserstaub bestehen ausschließlich aus dem Element Kohlenstoff. Aber auch die CFK und Prepregs beinhalten hauptsächlich die Elemente Kohlenstoff und Wasserstoff.

Besonders vorteilhaft ist es, wenn die kohlenstofffaserhaltigen Werkstoffe einen, gemäß der Prüfsiebung in DIN 66165-2:2016-08 bestimmten, noch kleineren gemittelten Äquivalentdurchmesser $x_{80}$ von maximal 0,1 mm, bevorzugt von 1 $\mu$m bis 0,1 mm, weiter bevorzugt 10 $\mu$m bis 0,1 mm, insbesondere 50 $\mu$m bis 0,1 mm aufweisen.

Des Weiteren weisen die kohlenstofffaserhaltigen Werkstoffe bevorzugt eine Dichte von 1 bis 2 g/cm$^3$, bevorzugt von 1,2 bis 1,8 g/cm$^3$, besonders bevorzugt von 1,4 bis 1,7 g/cm$^3$, auf.

In einer weiteren bevorzugten Ausführungsform des Pellets weisen die kohlenstofffaserhaltigen Werkstoffe einen Heizwert von mehr als 27.000 kJ/kg, bevorzugt von mehr als 30.000 kJ/kg, besonders bevorzugt von mehr als 32.000 kJ/kg, auf.

Diese Heizwerte kennzeichnen die kohlenstofffaserhaltigen Werkstoffe als gute Energieträger. Sie sind entweder vergleichbar mit den Heizwerten konventioneller Zuschlagstoffe oder übertreffen diese sogar. Beispielsweise beträgt der Heizwert der meisten CFK etwa 31.500 kJ/kg, während Koks nur einen Heizwert von 27.000 bis 31.000 kJ/kg aufweist.

Ebenso ist es bevorzugt, wenn die eisenhaltige Komponente in dem Pellet dispers vorliegt, besonders bevorzugt in Form von Spänen, Schroten, Konzentraten, Pulvern, Granulaten oder Schüttungen, ganz besonders bevorzugt mit einem, gemäß der Prüfsiebung in DIN 66165-2:2016-08 bestimmten, gemittelten Äquivalentdurchmesser xso von maximal 1,0 mm, bevorzugt 1 $\mu$m bis 1,0 mm, besonders bevorzugt 0,1 mm bis 1,0 mm.

Die eisenhaltige Komponente enthält bevorzugt Primärrohstoffe und/oder Sekundärrohstoffe, wobei die Primärrohstoffe besonders bevorzugt mindestens 80 Gew.-% Roheisen und/oder Eisenerz enthalten, insbesondere in Form von Hämatit, Magnetit, Goethit, Limonit und/oder Mischungen hiervon, und die Sekundärrohstoffe besonders bevorzugt mindestens 80 Gew.-% Eisen und/oder Eisenoxid enthalten, insbesondere gewonnen aus eisenhaltigen Abfällen.

Der Einsatz von Sekundärrohstoffen und die Verarbeitung von eisenhaltigen Abfällen zu der eisenhaltige Komponente hat ebenfalls einen nachhaltigen Aspekt: Eisenhaltige Bauteile, wie Stahlbauteile, unterliegen typischerweise einer Oxidation. Folglich bildet sich mit der Zeit eine Rostschicht an der Oberfläche der Bauteile aus. Durch die starke mechanische Beanspruchung bei der Aufbereitung der Bauteile wird Rost von der Oberfläche geschlagen und die Rostpartikel liegen in einer Mischung mit dem eisenhaltigen Werkstoff bzw. Stahl vor. Bei einem Recycling gelangen die Rostpartikel zusammen mit dem eisenhaltigen Werkstoff über die magnetische Fraktion in die stoffliche Verwertung. Hier verursachen die Rostpartikel Probleme aufgrund ihrer Dispersität. Ihre Handhabung und Verwertung der ist schwierig und stellt Anlagenbetreiber immer wieder vor große Herausforderungen.

Für den Einsatz im Hochofen oder in der Metallurgie sind die Rostpartikel in dieser dispersen Form nicht geeignet, da die disperse Schüttung schlecht zu handhaben ist und sie eine geringe Schüttdichte aufweist. Ihre Verwendung als Bestandteil der erfindungsgemäßen Zuschlagschlagstoffe, ist daher eine sinnvolle Maßnahme zur stofflichen Wiederverwertung.

In einer weiteren bevorzugten Ausführungsform enthalten die Pellets eine weitere Komponente, bevorzugt einen Hilfsstoff, ausgewählt aus der Gruppe bestehend aus siliziumhaltigen Zuschlagstoffen, z.B. Silizium und SiC, Altglykol, Chrom und Mischungen hiervon und/oder einen mineralischen Zuschlagstoff, ausgewählt aus der Gruppe bestehend aus Bentonit, Kalkstein, Dolomit, Olivin und Mischungen hiervon und/oder ein kohlenstoffhaltiges Additiv ausgewählt aus der Gruppe bestehend aus Kohle, Aktivkohle, Ruß, Graphit, Graphen, Elektrolyt und Mischungen hiervon und/oder Wasser, besonders bevorzugt in einem maximalen Gewichtsanteil von 20% bezogen auf das Gewicht des Pellets.

Die mineralischen Zuschlagstoffe wirken dabei als Bindemittel und verleihen dem Pellet eine größere Stabilität. Die Hilfsstoffe wirken entweder als als Legierungselement oder als Desoxidant zur Verbesserung der Korrosionsbeständigkeit.

Ein Beispiel für einen Elektrolyten als kohlenstoffhaltiges Additiv ist ausgelaugte Schwarzmasse aus Batterien, da diese einen großen Anteil an Kohlenstoffpartikeln der Abmessung < 0,1 mm enthält.

In einer bevorzugten Ausführungsform des Pellets beträgt das Gewichtsverhältnis der kohlenstofffaserhaltigen Werkstoffe zu der eisenhaltigen Komponente von 1 : 99 bis 25 : 75 und/oder die eisenhaltige Komponente liegt in einem Gewichtsanteil von 15 bis 25 Gew.-%, besonders bevorzugt 20 Gew.-%, in dem Pellet vor.

Durch die Verwendung dieser Gewichtsanteile kann eine maximale Menge an kohlenstofffaserhaltigen Werkstoffen, insbesondere den zur Entsorgung anstehend Abfällen, stofflich verwertet werden.

In einer Variante der Erfindung ist das das Pellet ein Grünpellet, welches keinem Sinterungsprozess unterzogen wurde.

in einer anderen Variante der Erfindung ist das Pellet hingegen gesintert und weist bevorzugt eine Porosität $\varepsilon$ zwischen 0,0 und 0,5 auf. Beim Sintern erfolgt insbesondere ein teilweiser oder vollständiger Abbrand der kohlenstofffaserhaltigen Werkstoffe, wodurch im Pellet Hohlräume entstehen und das Pellet porös wird. Derartige Pellets weisen einen reduzierten Gehalt an kohlenstofffaserhaltigen Werkstoffe auf oder sind bevorzugt vollständig frei von kohlenstofffaserhaltigen Werkstoffen.

Die Porosität $\varepsilon$ gibt dabei den Anteil der Hohlräume am Gesamtvolumen des Systems an (Volumenporosität). Sie berechnet sich gemäß der nachfolgend gezeigten Formel (1)

$$\varepsilon = V_H / V = (1-V_s) / V \quad (1)$$

wobei V das Gesamtvolumen, $V_H$ das Hohlraumvolumen und $V_s$ das Feststoffvolumen ist. Die Porosität $\varepsilon$ wird oft auch als relatives Lückenvolumen, als Lückengrad oder Hohlraumanteil bezeichnet. Der Wertebereich für $\varepsilon$ ist $0 < \varepsilon < 1$. Die Grenzwerte $\varepsilon = 0$ für den kompakten, hohlraumfreien Festkörper und $\varepsilon = 1$ für den reinen Hohlraum sind bei der Betrachtung poröser Systeme ohne Bedeutung.

In beiden Varianten der Erfindung sind die Kohlestofffasern aus den kohlestofffaserhaltigen Werkstoffen immobilisiert. Sie sind entweder in dem gesinterten Feststoffgefüge gebunden oder verbleiben durch die Feuchtigkeit im Grünpellet. Gefahren, die von freigesetzten Kohlenstofffasern ausgehen, werden somit für Mensch und Maschine auf ein Minimum reduziert.

Die Porosität des gesinterten Pellets kann bei Verwendung von CFK als kohlenstofffaserhaltigen Werkstoffen beeinflusst werden, indem entweder CFK mit höheren (hohe Porosität des Pellets) oder niedrigeren (niedrige Porosität des Pellets) Kunststoffgehalten ausgewählt werden.

Eine hohe Porosität der Pellets ist für Anwendungszwecke interessant, da sie mit einer hohen spezifischen Oberfläche und Permeabilität einhergeht. Die chemische Reaktion im metallurgischen Prozess ist bei Verwendung hochporöser Pellets gegenüber dem Einsatz nicht-poröser Pellets erhöht.

Die mechanische Festigkeit der Pellets bleibt auch unter den Bedingungen im metallurgischen Prozess zunächst erhalten, so dass verhindert wird, dass die porösen Pellets bei Zugabe zu dem Prozess sofort in sich zusammenfallen.

Bei dem erfindungsgemäßen Verfahren zur Herstellung von Pellets als Zuschlagstoff für metallurgische Prozesse werden zunächst kohlenstofffaserhaltige Werkstoffe auf einen, gemäß der Prüfsiebung in DIN 66165-2:2016-08 bestimmten, gemittelten Äquivalentdurchmesser $x_{80}$ von maximal 1,0 mm zerkleinert, die kohlenstofffaserhaltigen Werkstoffe anschließend in einem Verhältnis von 1:99 bis 50:50 mit einer eisenhaltigen Komponente gemischt, der Mischung wird Wasser zugefügt und sie wird anschließend zu Pellets geformt, die einen gemäß der Prüfsiebung DIN 66165-2:2016-03 bestimmten Äquivalenzdurchmesser Xso von 5 bis 50 mm aufweisen.

Bevorzugt ist dabei, wenn die kohlenstofffaserhaltige Werkstoffe auf einen, gemäß der Prüfsiebung in DIN 66165-2:2016-08 bestimmten, noch kleineren gemittelten Äquivalentdurchmesser xso von maximal 0,1 mm zerkleinert werden.

Bevorzugt ist weiterhin, dass die kohlenstofffaserhaltigen Werkstoffe in einem Mahlschritt zerkleinert werden, besonders bevorzugt mit Hilfe eines Mahl-Klassier-Kreislaufes oder eines Mahl-Sichter-Kreislaufes, wobei große kohlenstofffaserhaltige Partikel mit einem gemittelten Äquivalentdurchmesser xso von mehr als 1,0 mm, besonders bevorzugt von mehr als 0,1 mm, nach dem Mahlschritt abgetrennt und bevorzugt einem erneuten Mahlschritt zugeführt werden.

Ebenso ist bevorzugt, dass das Pellet nach dem Formen einer Temperaturbehandlung unterworfen wird, besonders bevorzugt einer Temperaturbehandlung bei Temperaturen im Bereich von 150°C bis 1000°C, insbesondere gesintert wird.

Hierbei kommt es zu einer Pyrolyse bzw. einem Abbrennen aller Kunststoffe, die in dem (Grün-)pellet enthalten sind. Hohlräume werden geschaffen, so dass das Pellet nach dem Sinterungsprozess eine hohe Porosität aufweist.

Des Weiteren ist es vorteilhaft, wenn die kohlenstofffaserhaltigen Werkstoffe mindestens einen Kunststoff enthalten, der bevorzugt entweder nach dem Formen der Pellets durch Temperatureinwirkung oder vor dem Mischen mit einer eisenhaltigen Komponente und einem anorganischen Bindemittel entfernt wird.

Hierzu kann entweder eine Dichtetrennung oder eine Stromklassierung verwendet werden, wobei bei der Stromklassierung ein Fluid verwendet wird.

Erfindungsgemäß wird das weiter oben beschriebene Pellet in metallurgischen Prozessen, bevorzugt in der Stahlherstellung, besonders bevorzugt als Ersatz für ein Reduktionsmittel, insbesondere als Ersatz für Koks verwendet.

Das Pellet eignet sich als Ersatz von Koks bei der Stahlerzeugung, da es unter Verwendung von kohlestofffaserhaltigen Abfällen, insbesondere CFK, hergestellt wird und einen hohen Gehalt an Kohlenstofffasern aufweist. Nach Verbrennen einer eventuell vorhandenen Kunststoffmatrix bleibt die Kohlenstofffaser übrig, die als Reduktionsmittel im Hochofen dient. Zudem wird durch die Substitution von Koks eine stoffliche Verwertung der CFK-haltigen Abfälle ermöglicht.

Die vorliegende Erfindung wird anhand der nachfolgenden Ausführungen und anhand der beigefügten Figur näher erläutert, ohne die Erfindung auf die hier gezeigten spezifischen Parameter beschränken zu wollen.

Gemäß der vorliegenden Erfindung kann ein Pellet bereitgestellt werden, das durch die Verwendung einer eisenhaltigen Komponente, z.B. von eisenhaltigen Rohstoffen (Roheisen, Eisenerz, Rost) einerseits eine ausreichende Dichte erfährt, um besser in die Schmelze eintauchen zu können, andererseits durch die Zugabe von kohlenstofffaserhaltigen Werkstoffen, z.B. CFK nach einem ggf. erfolgenden Sintern mit Entfernen des CFK Werkstoffes durch Oxidation ein poröses Eisenpellet zu erhalten. Mit den porösen Pellets werden prozessbedingte Verbesserungen bei der Stahlerzeugung erzielt. Das CFK wird zur ausreichenden mechanischen Stabilisierung der Grünpellets (vor der Sinterung) eingesetzt und ist im Endprodukt nicht mehr enthalten. Im Endprodukt "poröses Eisenpellet" ist kein CFK mehr enthalten, da es im Sinterprozess umgesetzt wird und dabei die gewünschte Porosität erzeugt.

Bevorzugt werden ausschließlich Rohstoffe verwendet, die bis auf den Binder keine zusätzlichen Fremdstoffe für die Eisenherstellung darstellen. Dazu erfolgt bevorzugt eine Mischung von eisenhaltigen- mit kohlenstoffhaltigen Werkstoffen (z.B. CFK), die bei der Sinterung (durch Oxidierung) entfernt werden. Besonders bevorzugt erfolgt eine Vorzerkleinerung auf << 1 mm der kohlenstofffaserhaltige Werkstoffe und/oder der eisenhaltigen Komponente, um eine ausreichend hohe Oberfläche zu schaffen, damit die ggf. erfolgende Oxidation im Pellet zügig noch während der Sinterung ablaufen kann. Im besten Falle entsteht so ein gesintertes Pellet ohne Kohlenstoffträger. Nur das grüne Pellet besteht aus eisen- und kohlenstoffhaltigen Werkstoffen. In Hochofenprozessen wird bevorzugt das gesinterte Pellet, das frei von kohlenstoffhaltigen Werkstoffen ist, eingesetzt

Bevorzugt kann bei der Herstellung der Pellets auf die Energiezufuhr (z.B. Heißpressen) verzichtet werden, was eine verfahrenstechnisch vorteilhaft sowie wirtschaftlichere Herstellung der Pellets erlaubt.

Bei der Agglomeration werden Bindungskräfte aktiviert, die zu einem Zusammenhalt der Körner bewirken. Der Zusammenhalt der Partikel hängt von den genutzten bzw. aktivierten Bindungsmechanismen ab. Dabei ist die Größe der sich ergebenden Agglomerate größer, als die der Einzelpartikel. Bei der erfindungsgemäß bevorzugt erfolgenden Zerkleinerung der Zuschlagstoffe für die Pellets auf eine Partikelgröße xso von < 0,1 mm kann eine große spezifische Oberfläche erzeugt werden, so dass eine schnellere Oxidation (Verbrennung) der Fasern erzeugt wird. Die verbrannten organischen Stoffe, zu denen auch die C-Fasern gehören, erzeugen Hohlräume in den Pellets. Diese Porosität ist gewünscht und führt einerseits zu einem schnelleren Abbrand der organischen Substanzen im Agglomerat und andererseits weisen die erzeugten Pellets mit hoher Porosität in der Schmelze ein besseres Durchströmungsverhalten von Gasen auf. Die Herstellung der Grünpellets erfolgt z.B. durch eine Aufbauagglomeration im Pelletierteller oder Eirich-Mischer, wobei z.B. durch Zugabe von Wasser und andererseits durch Hilfsstoffe die Bindungskräfte zwischen den Zuschlagstoffen verstärkt werden können.

Beispielhafte Zusammensetzungen der Grünpellets sind in den nachfolgenden Beispielen 1 und 2 angegeben:

Beispiel 1

| Komponente | Parameter | Masseanteil |
|---|---|---|
| $Fe_3O_4$, $Fe_2O_3$ | Eisenerz | 80% |
| CFK* | Zerkleinert auf $x_{80}$ < 100 $\mu$m, 50% C-Fasergehalt | 18 % |
| Bindemittel | Bentonit | 2 % |
| Porosität nach dem Sintern | | 18% |
| *CFK: In eine Kunststoffmatrix eingebettete Kohlenstofffasern mit einem Gewichtsanteil von C-Fasern von 50 % | | |

Beispiel 2:

| Komponente | Parameter | Masseanteil |
|---|---|---|
| $Fe_2O_3$ | Rost, Späne | 50% |
| CFK* | Zerkleinert auf $x_{80}$ < 150 $\mu$m, 50% C-Fasergehalt | 49 % |
| Bindemittel | Bentonit | 1 % |
| Porosität nach dem Sintern | | 49% |
| *CFK: In eine Kunststoffmatrix eingebettete Kohlenstofffasern mit einem Gewichtsanteil von C-Fasern von 50 % | | |

Mit :

$$\Phi = \left(1 - \frac{\rho}{\rho_0}\right) \times 100\,\%$$

$\rho_0$ Rohdichte, $\rho$ ermittelte Dichte, $\Phi$ Porosität

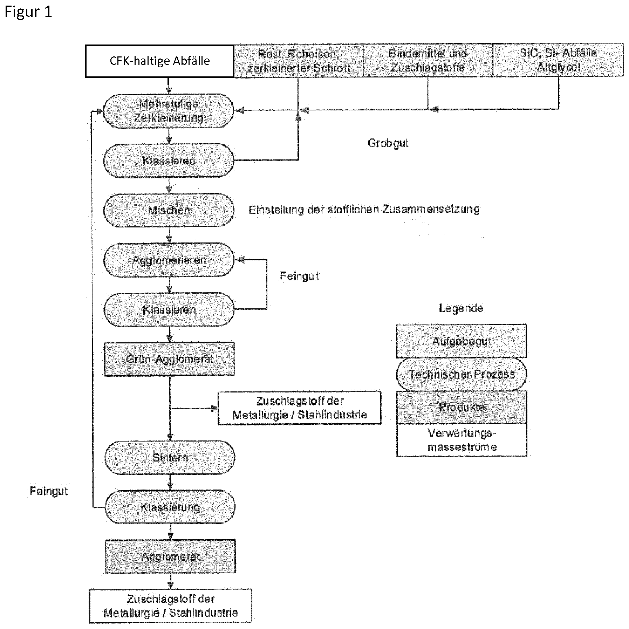

Figur 1 zeigt die einzelnen Schritte eines erfindungsgemäßen Verfahrens für das Verfahren zur Herstellung der erfindungsgemäßen Pellets in einem schematischen Fließbild. Zunächst werden die festen Ausgangsstoffe für die Herstellung der Pellets einer mehrstufigen Zerkleinerung zugeführt. Die zerkleinerten Partikel werden anschließend klassiert, (mit Wasser) gemischt und zu einem Grünpellet agglomeriert. Die Partikel, die oberhalb des maximalen Äquivalentdurchmessers liegen (Grobgut), werden hingegen in die Zerkleinerungsstufe zurückgeführt und erneut gemahlen. Die Partikel, die sich bei der nicht bei dem ersten Versuch zu einem Grünpellet agglomerieren ließen (Feingut), werden ebenfalls der Agglomerationsstufe erneut zugeführt, damit diese im nächsten Durchgang Bestandteil eines Pellets werden können.

Bei der Weiterverarbeitung des Grünpellets bestehen nun zwei Verfahrensalternativen. Entweder wird das Grünpellet direkt als Zuschlagstoff verwendet und einem metallurgischen Prozess zugesetzt oder es wird vor der Verwendung als Zuschlagstoff gesintert, wobei überbleibendes Feingut erneut in das Verfahren rückgeführt werden kann.

**Patentansprüche**

1. Pellet als Zuschlagstoff für metallurgische Prozesse enthaltend

   - kohlenstofffaserhaltige Werkstoffe mit einem, gemäß der Prüfsiebung in DIN 66165-2:2016-08 bestimmten, gemittelten Äquivalentdurchmesser $x_{80}$ von maximal 1,0 mm und
   - eine eisenhaltige Komponente,

wobei das Gewichtsverhältnis der kohlenstofffaserhaltigen Werkstoffe zu der eisenhaltigen Komponente von 1 : 99 bis 50 : 50 beträgt und das Pellet einen, gemäß der Prüfsiebung in DIN 66165-2:2016-08 bestimmten, gemittelten Äquivalentdurchmesser $x_{80}$ von 5 bis 25 mm aufweist.

2.  Pellet gemäß Anspruch 1 **dadurch gekennzeichnet, dass** das Pellet einen, gemäß der Prüfsiebung in DIN 66165-2:2016-08 bestimmten, gemittelten Äquivalentdurchmesser $x_{80}$ von von 8 bis 20 mm, bevorzugt von 10 bis 15 mm aufweist.

3.  Pellet gemäß einem der vorangegangenen Ansprüche **dadurch gekennzeichnet, dass** die kohlenstofffaserhaltigen Werkstoffe aus der Gruppe bestehend aus kohlenstofffaserverstärkten Kunststoffen (CFK), mit einer Polymerschlichte benetzten Kohlestofffasern und -filamenten (Prepregs), Kohlestofffaserverschnitten, Kohlestofffasergeflechten, Kohlestofffasergeweben, Kohlestofffasergelegen, Kohlestofffaservliesen, Kohlestofffaserstaub, Kohlenstofffasern und Mischungen hiervon ausgewählt sind, bevorzugt kohlenstofffaserhaltige Abfälle sind.

4.  Pellet gemäß einem der vorangegangenen Ansprüche **dadurch gekennzeichnet, dass** die kohlenstofffaserhaltigen Werkstoffe einen, gemäß der Prüfsiebung in DIN 66165-2:2016-08 bestimmten, gemittelten Äquivalentdurchmesser $x_{80}$ von maximal 0,1 mm, bevorzugt von 1 $\mu$m bis 0,1 mm, weiter bevorzugt 10 $\mu$m bis 0,1 mm, insbesondere 50 $\mu$m bis 0,1 mm aufweisen.

5.  Pellet gemäß einem der vorangegangenen Ansprüche **dadurch gekennzeichnet, dass** die kohlenstofffaserhaltigen Werkstoffe einen Heizwert von mehr als 27.000 kJ/kg, bevorzugt von mehr als 30.000 kJ/kg, besonders bevorzugt von mehr als 32.000 kJ/kg, aufweisen.

6.  Pellet gemäß einem der vorangegangenen Ansprüche, **dadurch gekennzeichnet, dass** die eisenhaltige Komponente dispers vorliegt, bevorzugt in Form von Spänen, Schroten, Konzentraten, Pulvern, Granulaten oder Schüttungen, besonders bevorzugt mit einem, gemäß der Prüfsiebung in DIN 66165-2:2016-08 bestimmten, gemittelten Äquivalentdurchmesser $x_{80}$ von maximal 1,0 mm, bevorzugt 1 $\mu$m bis 1,0 mm, besonders bevorzugt 0,1 mm bis 1,0 mm.

7.  Pellet gemäß einem der vorangegangenen Ansprüche, **dadurch gekennzeichnet, dass** die eisenhaltige Komponente eine eisenhaltige Komponente enthaltend Primärrohstoffe und/oder Sekundärrohstoffe, ist

    wobei die Primärrohstoffe bevorzugt mindestens 80 Gew.-% Roheisen und/oder Eisenerz enthalten, insbesondere in Form von Hämatit, Magnetit, Goethit, Limonit und/oder Mischungen hiervon, und
    die Sekundärrohstoffe bevorzugt mindestens 80 Gew.-% Eisen und/oder Eisenoxid enthalten, insbesondere gewonnen aus eisenhaltigen Abfällen.

8.  Pellet gemäß einem der vorangegangenen Ansprüche, **dadurch gekennzeichnet, dass** es mindestens eine weitere Komponente enthält, bevorzugt einen Hilfsstoff, ausgewählt aus der Gruppe bestehend aus siliziumhaltigen Zuschlagstoffen, z.B. Silizium und SiC, Altglykol, Chrom und Mischungen hiervon und/oder

    einen mineralischen Zuschlagstoff, ausgewählt aus der Gruppe bestehend aus Bentonit, Kalkstein, Dolomit, Olivin und Mischungen hiervon und/oder
    ein kohlenstoffhaltiges Additiv ausgewählt aus der Gruppe bestehend aus Kohle, Aktivkohle, Ruß, Graphit, Graphen, Elektrolyt und Mischungen hiervon und/oder
    Wasser,
    besonders bevorzugt in einem maximalen Gewichtsanteil von 20% bezogen auf das Gewicht des Pellets.

9.  Pellet gemäß einem der vorangegangenen Ansprüche **dadurch gekennzeichnet, dass** das Gewichtsverhältnis der kohlenstofffaserhaltigen Werkstoffe zu der einenhaltigen Komponente von 1 : 99 bis 25 : 75 beträgt und/oder die eisenhaltige Komponente in einem Gewichtsanteil von 15 bis 25 Gew.-%, bevorzugt 20 Gew.-%, in dem Pellet vorliegt.

10. Pellet gemäß einem der vorangegangenen Ansprüche, **dadurch gekennzeichnet, dass** das Pellet ein Grünpellet ist, welches keinem Sinterungsprozess unterzogen wurde.

11. Pellet gemäß einem der vorangegangenen Ansprüche, **dadurch gekennzeichnet, dass** das Pellet gesintert ist und bevorzugt eine Porosität zwischen 0,0 und 0,5 aufweist.

**12.** Verfahren zur Herstellung von Pellets als Zuschlagstoff für metallurgische Prozesse, bei dem zunächst kohlenstofffaserhaltige Werkstoffe auf einen, gemäß der Prüfsiebung in DIN 66165-2:2016-08 bestimmten, gemittelten Äquivalentdurchmesser $x_{80}$ von maximal 1,0 mm zerkleinert werden, die kohlenstofffaserhaltigen Werkstoffe anschließend in einem Verhältnis von 1:99 bis 50:50 mit einer eisenhaltigen Komponente gemischt werden, der Mischung Wasser zugefügt und anschließend zu Pellets mit einem, gemäß der Prüfsiebung in DIN 66165-2:2016-08 bestimmten, gemittelten Äquivalentdurchmesser $x_{80}$ von 5 bis 25 mm, geformt wird.

**13.** Verfahren gemäß Anspruch 12 **dadurch gekennzeichnet, dass** die kohlenstofffaserhaltige Werkstoffe auf einen, gemäß der Prüfsiebung in DIN 66165-2:2016-08 bestimmten, gemittelten Äquivalentdurchmesser x80 von maximal 0,1 mm zerkleinert werden.

**14.** Verfahren gemäß einem der Ansprüche 12 oder 13 **dadurch gekennzeichnet, dass** die kohlenstofffaserhaltigen Werkstoffe in einem Mahlschritt zerkleinert werden, bevorzugt mit Hilfe eines Mahl-Klassier-Kreislaufes oder eines Mahl-Sichter-Kreislaufes, wobei große kohlenstofffaserhaltige Partikel mit einem gemittelten Äquivalentdurchmesser xsovon mehr als 1,0 mm, bevorzugt von mehr als 0,1 mm, nach dem Mahlschritt abgetrennt und bevorzugt einem erneuten Mahlschritt zugeführt werden.

**15.** Verfahren gemäß einem der Ansprüche 12 bis 14 **dadurch gekennzeichnet, dass** das Pellet nach dem Formen einer Temperaturbehandlung unterworfen wird, bevorzugt einer Temperaturbehandlung bei Temperaturen im Bereich von 150°C bis 1000°C, insbesondere gesintert wird.

**16.** Verfahren gemäß einem der Ansprüche 12 bis 15 **dadurch gekennzeichnet, dass** die kohlenstofffaserhaltigen Werkstoffe mindestens einen Kunststoff enthalten, der bevorzugt entweder nach dem Formen der Pellets durch Temperatureinwirkung oder vor dem Mischen mit einer eisenhaltigen Komponente und einem anorganischen Bindemittel entfernt wird.

**17.** Verwendung des Pellets, insbesondere des gesinterten porösen Pellets gemäß den Ansprüchen 1 bis 11 in metallurgische Prozessen, bevorzugt in der Stahlherstellung, besonders bevorzugt als Ersatz für ein Reduktionsmittel, insbesondere als Ersatz für Koks.

**Claims**

**1.** A pellet as an admixture for metallurgical processes including

- materials containing carbon fibers and having an averaged equivalent diameter $x_{80}$ of a maximum of 1.0 mm determined by test sieving in accordance with DIN 66165-2:2016-08; and
- a component containing iron,

wherein the weight ratio of the materials containing carbon fibers to the component containing iron amounts to 1: 99 to 50: 50 and the pellet has an averaged equivalent diameter xso of 5 to 25 mm determined in accordance with the test sieving in DIN 66165-2:2016-08.

**2.** A pellet in accordance with claim 1, **characterized in that** the pellet has an averaged equivalent diameter xso of 8 to 20 mm, preferably of 10 to 15 mm, determined by test sieving in accordance with DIN 66165-2:2016-08.

**3.** A pellet in accordance with one of the preceding claims, **characterized in that** the materials containing carbon fibers are selected from the group consisting of carbon fiber reinforced plastics (CFRPs) having carbon fibers and carbon filaments wetted with a polymer layer (prepregs), carbon fiber blends, carbon fiber braids, carbon fiber weaves, carbon fiber non-crimp fabrics, carbon fiber non-woven fabrics, carbon fiber dust, carbon fibers, and mixtures thereof, are preferably waste materials containing carbon fiber.

**4.** A pellet in accordance with one of the preceding claims, **characterized in that** the materials containing carbon fibers have an averaged equivalent diameter $x_{80}$ of a maximum of 0.1 mm, preferably of 1 $\mu$m to 0.1 mm, further preferably 10 $\mu$m to 0.1 mm, in particular 50 $\mu$m to 0.1 mm determined by test sieving in accordance with DIN 66165-2:2016-08.

**5.** A pellet in accordance with one of the preceding claims, **characterized in that** the materials containing carbon fibers have a calorific value of more than 27,000 kJ/kg, preferably of more than 30,000 kJ/kg, particularly preferably of more than 32,000 kJ/kg.

6. A pellet in accordance with one of the preceding claims, **characterized in that** the component containing iron is present in dispersed form, preferably in the form of chips, shot, concentrates, powders, granulates, or bult materials, particularly preferably having an averaged equivalent diameter $x_{80}$ of a maximum of 1.0 mm, preferably 1 $\mu$m to 1.0 mm, particularly preferably 0.1 mm to 1.0 mm, determined in accordance with the test sieving in DIN 66165-2:2016-08.

7. A pellet in accordance with one of the preceding claims, **characterized in that** the component containing iron is a component containing iron including primary resources and/or secondary resources,

with the primary resources preferably including at least 80 wt% crude iron and/or iron ore, in particular in the form of hematite, magnetite, goethite, limonite, and/or mixtures thereof; and the secondary resources preferably including at least 80 wt% iron and/or iron oxide, in particular acquired from waste materials containing iron.

8. A pellet in accordance with one of the preceding claims, **characterized in that** it includes at least one further component, preferably an auxiliary material, selected from the group consisting of admixtures containing silicon, e.g. silicon and SiC, waste glycol, chromium, and mixtures thereof; and/or

a mineral admixture selected from the group consisting of bentonite, limestone, dolomite, olivine, and mixtures thereof; and/or
an admixture containing carbon selected from the group consisting of carbon, active carbon, carbon black, graphite, graphene, electrolyte, and mixtures thereof.; and/or
water,
particularly preferably in a maximum weight portion of 20% with respect to the weight of the pellet.

9. A pellet in accordance with one of the preceding claims, **characterized in that** the weight ratio of the materials containing carbon to the component containing iron amounts to 1: 99 to 25: 75 and/or the component containing iron is present in the pellet in a weight portion of 15 to 25 wt%, preferably 20 wt%.

10. A pellet in accordance with one of the preceding claims, **characterized in that** the pellet is a green pellet that has not been subjected to a sintering process.

11. A pellet in accordance with one of the preceding claims, **characterized in that** the pellet has been sintered and preferably has a porosity between 0.0 and 0.5.

12. A method of manufacturing pellets as an admixture for metallurgical processes in which first materials containing carbon fibers are comminuted to an averaged equivalent diameter $x_{80}$ of a maximum of 1.0 mm determined in accordance with the test sieving in DIN 66165-2:2016-08; the materials containing carbon fibers are subsequently mixed with a component containing iron in a ratio of 1:99 to 50:50; water is added to the mixture; and is subsequently shaped into pellets having an averaged equivalent diameter xso of 5 to 25 mm determined bytest sieving in accordance with DIN 66165-2:2016-08.

13. A method in accordance with claim 12, **characterized in that** the materials containing carbon fibers are comminuted to an averaged equivalent diameter $x_{80}$ of a maximum of 0.1 mm determined by test sieving in accordance with DIN 66165-2:2016-08.

14. A method in accordance with one of the claims 12 or 13, **characterized in that** the materials containing carbon fibers are comminuted in a grinding step, preferably with the aid of a grinding and classification circuit or a grinding and separator circuit, with coarse particles containing carbon fibers having an averaged equivalent diameter xso of more than 1.0 mm, preferably of more than 0.1 mm, being separated after the grinding step and preferably being supplied to a further grinding step.

15. A method in accordance with one of the claims 12 to 14, **characterized in that** the pellet is subjected to a temperature treatment after the shaping, preferably a temperature treatment at temperatures in the range from 150°C to 1000°C, is in particular sintered.

**16.** A method in accordance with one of the claims 12 to 15, **characterized in that** the materials containing carbon fibers include at least one plastic that is preferably removed either after the shaping of the pellets by a temperature effect or prior to the mixing with a component containing iron and an inorganic binding agent.

**17.** Use of the pellet, in particular of the sintered porous pellet in accordance with the claims 1 to 11 in metallurgical processes, preferably in the manufacture of steel, particularly preferably as a replacement for a reducing agent, in particular as a replacement for coke.

**Revendications**

**1.** Pellet comme granulat pour des processus métallurgiques contenant

- des matériaux contenant des fibres de carbone avec diamètre équivalent moyen $X_{80}$, déterminé selon le tamisage d'essai dans la norme DIN 66165-2:2016-08, de maximum 1,0 mm, et
- un composant contenant du fer,

dans lequel le rapport pondéral des matériaux contenant des fibres de carbone au composant contenant du fer est de 1: 99 à 50: 50 et le pellet présente un diamètre équivalent moyen xso, déterminé selon le tamisage d'essai dans la norme DIN 66165-2:2016-08, de 5 à 25 mm.

**2.** Pellet selon la revendication 1, **caractérisé en ce que** le pellet présente un diamètre équivalent moyen $x_{80}$, déterminé selon le tamisage d'essai dans la norme DIN 66165-2 :2016-08, de 8 à 20 mm, de préférence de 10 à 15 mm.

**3.** Pellet selon l'une quelconque des revendications précédentes, **caractérisé en ce que** les matériaux contenant des fibres de carbone sont choisis dans le groupe constitué par les matières plastiques renforcées de fibres de carbone (CFK), les fibres et filaments de carbone (préim-prégnés) mouillés avec un ensimage polymère, les coupages de fibres de carbone, les tresses de fibres de carbone, les tissus de fibres de carbone, les nappes de fibres de carbone, les ton-tissés de fibres de carbone, la poussière de fibres de carbone, les fibres de carbone et leurs mélanges, de préférence les déchets contenant des fibres de carbone.

**4.** Pellet selon l'une quelconque des revendications précédentes, **caractérisé en ce que** les matériaux contenant des fibres de carbone présentent un diamètre équivalent moyen xso, déterminé selon le tamisage d'essai dans la norme DIN 66165-2 :2016-08, de maximum 0,1 mm, de préférence de 1 $\mu$m à 0,1 mm, de préférence encore de 10 $\mu$m à 0,1 mm, en particulier de 50 $\mu$m à 0,1 mm.

**5.** Pellet selon l'une quelconque des revendications précédentes, **caractérisé en ce que** les matériaux contenant des fibres de carbone présentent une valeur calorifique supérieure à 27 000 kJ/kg, de préférence supérieure à 30 000 kJ/kg, de manière particulièrement préférée supérieure à 32 000 kJ/kg.

**6.** Pellet selon l'une quelconque des revendications précédentes, **caractérisé en ce que** le composant contenant du fer est présent sous forme dispersée, de préférence sous forme de copeaux, de ferraille, de concentrés, de poudres, de granulés ou de vrac, de manière particulièrement préférée avec un diamètre équivalent moyen xso déterminé selon le tamisage d'essai dans la norme DIN 66165-2:2016-08, de maximum 1,0 mm, de préférence de 1 $\mu$m à 1,0 mm, de manière particulièrement préférée de 0,1 mm à 1,0 mm.

**7.** Pellet selon l'une quelconque des revendications précédentes, **caractérisé en ce que** le composant contenant du fer est un composant contenant du fer contenant des matières premières primaires et/ou des matières premières secondaires

dans lequel les matières premières primaires contiennent de préférence au moins 80 % en poids de fer brut et/ou de minerai de fer, en particulier sous forme d'hématite, de magnétite, de goethite, de limonite et/ou de leurs mélanges,
et les matières premières secondaires contiennent de préférence au moins 80 % en poids de fer et/ou d'oxyde de fer, en particulier obtenus à partir de déchets contenant du fer.

**8.** Pellet selon l'une quelconque des revendications précédentes, **caractérisé en ce qu'**il contient au moins un autre composant, de préférence un adjuvant, choisi dans le groupe constitué par les granulats contenant du silicium, par exemple du silicium et du SiC, du glycol usagé, du chrome et leurs mélanges, et/ou

un granulat minéral choisi dans le groupe constitué par la bentonite, le calcaire, la dolomite, l'olivine et leurs mélanges, et/ou

un additif carboné choisi dans le groupe constitué par le charbon, le charbon actif, le noir de carbone, le graphite, le graphène, l'électrolyte et leurs mélanges, et/ou

de l'eau,

de manière particulièrement préférée dans un pourcentage en poids maximal de 20 % en poids par rapport au poids du pellet.

9.  Pellet selon l'une quelconque des revendications précédentes, **caractérisé en ce que** le rapport pondéral des matériaux contenant des fibres de carbone au composant contenant un seul élément est de 1 : 99 à 25: 75 et/ou le composant contenant du fer est présent dans le pellet dans un pourcentage en poids de 15 à 25 % en poids, de préférence de 20 % en poids.

10. Pellet selon l'une quelconque des revendications précédentes, **caractérisé en ce que** le pellet est un pellet vert, lequel n'a pas été soumis à un processus de frittage.

11. Pellet selon l'une quelconque des revendications précédentes, **caractérisé en ce que** le pellet est fritté et présente de préférence une porosité comprise entre 0,0 et 0,5.

12. Procédé de fabrication de pellets en tant que granulat pour des processus métallurgiques, selon lequel des matériaux contenant des fibres de carbone sont tout d'abord broyés à un diamètre équivalent moyen xso, déterminé selon le tamisage d'essai dans la norme DIN 66165-2:2016-08, de maximum 1,0 mm, les matériaux contenant des fibres de carbone sont ensuite mélangés dans un rapport de 1:99 à 50:50 avec un composant contenant du fer, on ajoute de l'eau au mélange et on le forme ensuite en pellets avec un diamètre équivalent moyen xso déterminé selon le tamisage d'essai dans la norme DIN 66165-2:2016-08, de 5 à 25 mm.

13. Procédé selon la revendication 12, **caractérisé en ce que** les matériaux contenant des fibres de carbone sont broyés à un diamètre équivalent moyen x80, déterminé selon le tamisage d'essai dans la norme DIN 66165-2 :2016-08, de maximum 0,1 mm.

14. Procédé selon l'une quelconque des revendications 12 ou 13, **caractérisé en ce que** les matériaux contenant des fibres de carbone sont broyés dans une étape de broyage, de préférence à l'aide d'un circuit de broyage-classification ou d'un circuit de broyage-séparation, dans lequel les grandes particules contenant des fibres de carbone avec un diamètre équivalent moyen xso supérieur à 1,0 mm, de préférence supérieur à 0,1 mm, sont séparées après l'étape de broyage et de préférence amenées à une nouvelle étape de broyage.

15. Procédé selon l'une quelconque des revendications 12 à 14, **caractérisé en ce qu'**après le formage, le pellet est soumis à un traitement thermique, de préférence à un traitement thermique à des températures dans la plage de 150°C à 1000°C, en particulier fritté.

16. Procédé selon l'une quelconque des revendications 12 à 15, **caractérisé en ce que** les matériaux contenant des fibres de carbone contiennent au moins une matière plastique, qui est de préférence éliminée soit après le formage des pellets par action de la température, soit avant le mélange avec un composant contenant du fer et un liant inorganique.

17. Utilisation du pellet, en particulier du pellet poreux fritté selon les revendications 1 à 11, dans des processus métallurgiques, de préférence dans la fabrication de l'acier, de manière particulièrement préférée en remplacement d'un agent réducteur, en particulier en remplacement du coke.

Figur 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5372635 A
- DE 102015011067 A1
- DE 102005062036 A1
- JP 5475630 B

**In der Beschreibung aufgeführte Nicht-Patentliteratur**

- Composites Marktbericht 2015. **THOMAS KRAUS ; MICHAEL KÜHNEL ; ELMAR WITTEN.** Industrieverein Verstärkte Kunststoffe AVK, Carbon Composites e.V. CCeV. 2015